# EUROPEAN PATENT SPECIFICATION

(11) **EP 2 179 837 B1**
(45) Date of publication and mention of the grant of the patent: **03.04.2013**
(21) Application number: 09172109.2
(22) Date of filing: 02.10.2009
(51) Int. Cl.: B29C 65/06, E06B 3/96

(54) **Profile joining system**
Profilverbindungssystem
Système d'assemblage de profils

(30) Priority: 27.10.2008 TR 200808124 U
(43) Date of publication of application: 28.04.2010
(73) Proprietor: Murat Makina Sanayi Ve Ticaret Limited Sirketi, 34217 Istanbul (TR)
(72) Inventor: Buda, Murat, 34217 Istanbul (TR)
(74) Representative: Cayli, Hülya

(56) References cited:
- EP-A1- 1 447 167
- EP-A1- 1 932 650
- EP-A2- 1 338 404
- WO-A1-2005/009664
- WO-A1-2007/131358
- DE-A1- 2 110 540
- DE-A1- 3 002 713
- DE-A1- 4 138 501
- DE-U1- 29 605 394
- GB-A- 2 350 318

## Description

### Technical Field

The present invention relates to a system which provides the joining of frame profiles and interconnection profiles of doors, windows, and similar structures, by means of friction welding.

### Prior Art

Referring to the prior art, windows and doors made of PVC materials for use at homes, offices, and similar places are subjected to various processes during manufacture. An operation which occupies a significant part of these processes is the assembly of interconnection profiles, the so-called "meeting rail profiles", into previously welded frames.

One of the widely-used methods for coupling interconnection profiles into the frames is the screw-connection method. In this method, two ends of a an interconnection profile are previously milled at a profile fitting machine according to the form of the internal surface by which it is to be fit into the frame. It is then screwed to the frame by making use of various connection elements. In another method, two ends of an interconnection profile are tapered in a "Λ"-like shape, whereas a slot or recess is opened on the frame in a "V"-like shape. The opened slot and tapered sections are brought together by means of heating in a "V" welding machine. Any burrs resulting from the welding operation are cleaned by special machines.

The screw-coupling method, among said joining techniques, requires longer periods of time for the assembly work, additionally causing defective assemblies due to incorrect sizes, and demanding an excessive amount of connection elements. As for the resistance heating method, four separate machines are employed for cutting the ends and edges, and for welding and cleaning, this method also requiring longer periods of assembly time as compared to the screw-coupling method.

One of the processes for joining two materials together in a rapid and smooth manner with as low burr formation as possible, according to the prior art, is the friction welding process. The published patent applications WO0112420, CA2439552 developed for welding the corner joints of frame profiles may be cited as relevant examples here.

Another relevant example is the patent document No EP 1 447 167 A1. Said patent document discloses a process and a device for friction welding bonding surfaces of two parts. In order to incur a frictional welding process, the joint faces of the adjoining components are rubbed together with the phases offset from each other.

The patent document No WO 2005/009664 discloses a multi head friction welding method and a device for carrying out the method. Said method is related to the welding of joining surfaces of shaped parts. Under the influence of the friction welding heads, the individual shaped parts and said joining surfaces are aligned with one another and the joining surfaces are pressed together and the free ends of said shaped parts on both sides of the joining surfaces are set into vibration by means of eccentric shafts.

The patent document No EP 1 932 650 A1 discloses a method for the production of a mitered corner joint between two components by vibration welding. During the welding process, the two components are set into mutually perpendicular straight-line translational oscillations and the phases are matched to each other to provide the oscillation of miter areas of the components at right angles.

In addition, the patent document No WO 2007/131358 A1 discloses a welded joint structure for thermoplastic members. An interposed junction piece vibratory is welded to a first and second member at respective welding surfaces. Between unwelded portions of the first and second members, the welding surface of the first member and the welding surface of the second member form an angle in a plane normal to the interposed junction piece.

The patent document No DE 296 05 394 U1 A discloses a welding machine for the production of window frames. The invention uses a rack with at least six welding heads for welding parts of each frame and a welding mirror with a respective angle.

The patent document No DE 30 02 713 A1 discloses the state of the art. In the patent document, a method and an apparatus for welding of thermoplastic profiles are described. According to the invention, the thermoplastic profiles are heated to a welding temperature. When the welding process is finished, the welded profiles are subjected to cutting process.

The patent document No DE 21 10 540 A1 discloses a further example; a frame welder with four clamp members for plastic frames. In this invention, the clamp members are placed at right angles with respect to each other. Two of the clamp members are able to move together to carry out the welding process and the other two, which are oppositely placed, are arranged to be stationary during welding.

Furthermore, the patent document No EP 1 338 404 A2 discloses a device and a process for welding plastic profiles with at least two carriages to hold the profiles; stoppers for adjustment and welding; and a heating element. The invention is based on the fact that two plastic profiles connected to each other, move against each other or one plastic profile stops and the other moves toward it. By this way, the control of the motion of the plastic profiles by a device is provided during welding process.

For simultaneous welding of several plastic profiles at any angle, the patent document No DE 41 38 501 A1 discloses a multi-position welder. The basic feature of the invention is that the mounting of the positioning surfaces on a plane and said surfaces can be rotated relative to the welding head along a vertical axis. Moreover, the welding head and the positioning surfaces can also be rotated at a relative degree.

In the methods disclosed in these applications, materials to be joined are brought together to produce high-frequency mechanical friction in between, the resulting heat melting the materials to some extent, such that they are welded and the joining of profile corners completed.

### Brief Description of Invention

As for the profile joining system according to the present invention, it is developed for joining an interconnection profile (i.e. meeting rail profile) into a frame by means of friction welding. The system comprises in general terms a stand onto which a frame is situated; front and side thrusts onto which the side profiles, i.e. jambs, of the frame are leaned; at least one clamp, disposed on the front thrust and clamping at least one side profile; at least one positioning element adjusting the position of the interconnection profile, i.e. meeting rail; and at least one retainer block, used for keeping the interconnection profile immobilized.

The frame and the interconnection profile are joined temporarily before processed in the system. During this joining operation, the interconnection profile is tightly fit in between two side profiles of the frame. Thus, the butt surfaces of the interconnection profile are brought in contact with the side surfaces of side profiles. These contact surfaces are the surfaces onto which friction welding is applied.

Prior to temporary joining, the butt surfaces of the interconnection profiles (butt surfaces meaning the open sections of both ends of the profile) are processed according to the geometrical structure of the side surface of side profiles so as to give the most proper contact surface for welding.

After the frame is situated on the system together with the interconnection profile, the position of the interconnection profile is adjusted with respect to the frame and the frame is immobilized with the help of mobile and/or stationary trust(s), as well as guiding apparatuses. The interconnection profile is thus supported by means of various retainer blocks.

Once the retainer blocks are vibrated by means of vibration units, mechanical friction is generated between the interconnection profile and the frame, so that the heat that occurs in between two materials melts the friction surfaces to some extent and welds the profiles together.

### Objective of Invention

The objective of the present invention is to provide a system which provides the joining of an interconnection profile in between two opposite profiles of a frame by means of friction welding.

Another objective of the present invention is to prevent any burr formation at the joint during the friction welding process conducted by means of said system, thereby obtaining a neat-appearing joint.

A further objective of the present invention is to ensure an accurate adjustment be made for the position and angle of the interconnection profile with respect to the frame profile.

Still another objective of the present invention is to provide a system, which performs said welding operations in a rapid, inexpensive, and reliable manner.

### Description of Figures

An exemplary profile joining system according to the present invention is illustrated in annexed figures as described below briefly.

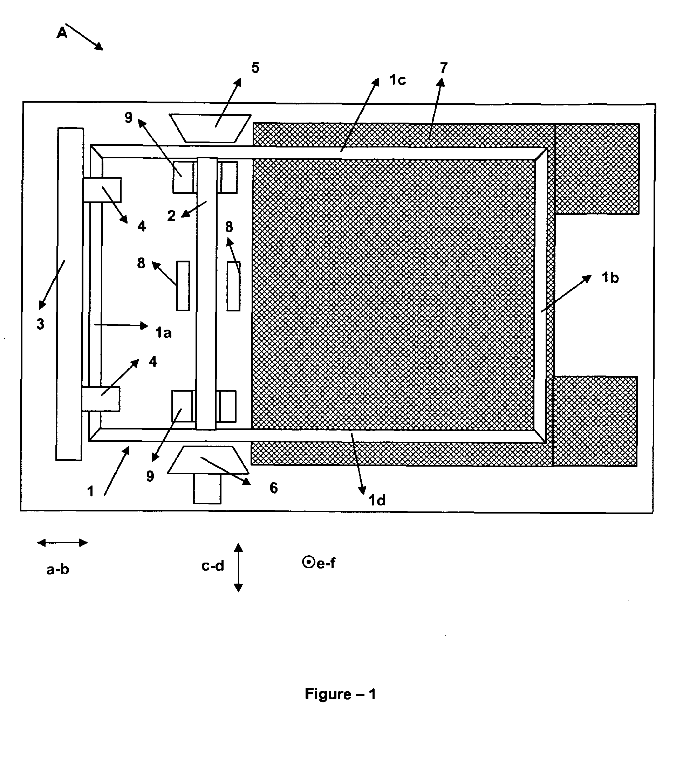

Figure 1 is a simplified schematic illustration of a profile joining system from above.

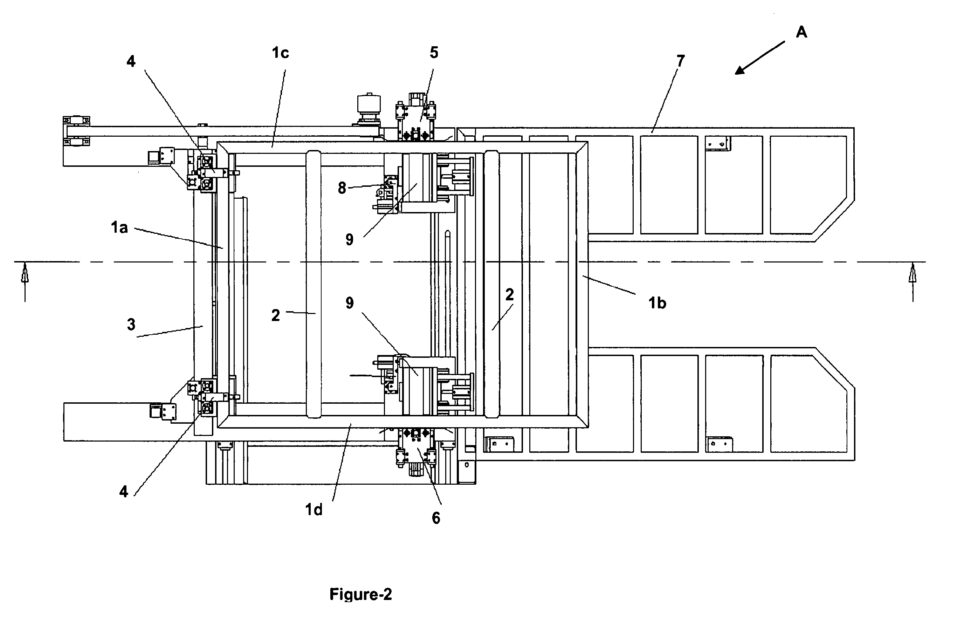

Figure 2 is a detailed schematic illustration of the profile joining system from above.

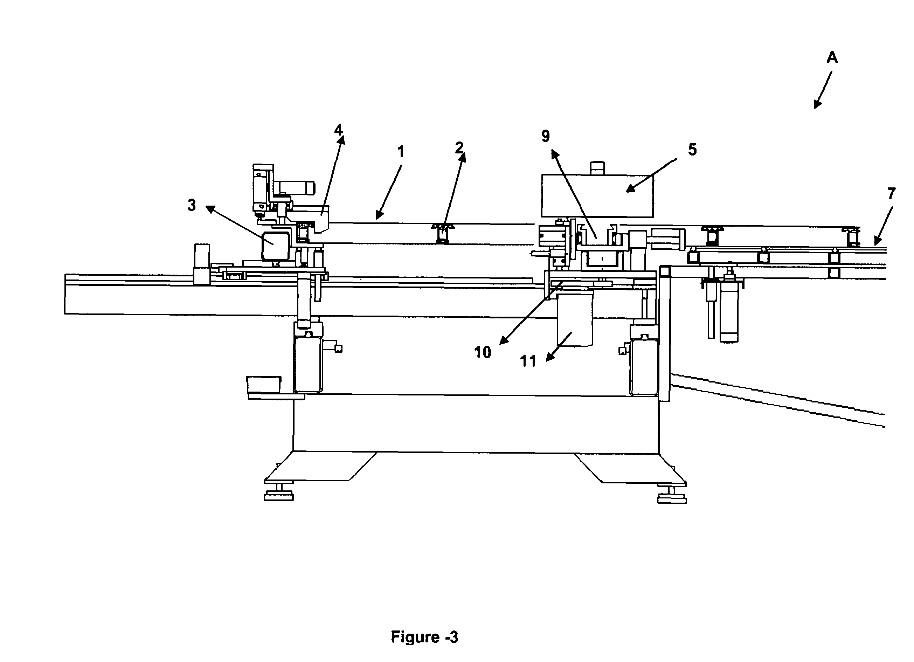

Figure 3 is a schematic cross-sectional illustration of the profile joining system from one side.

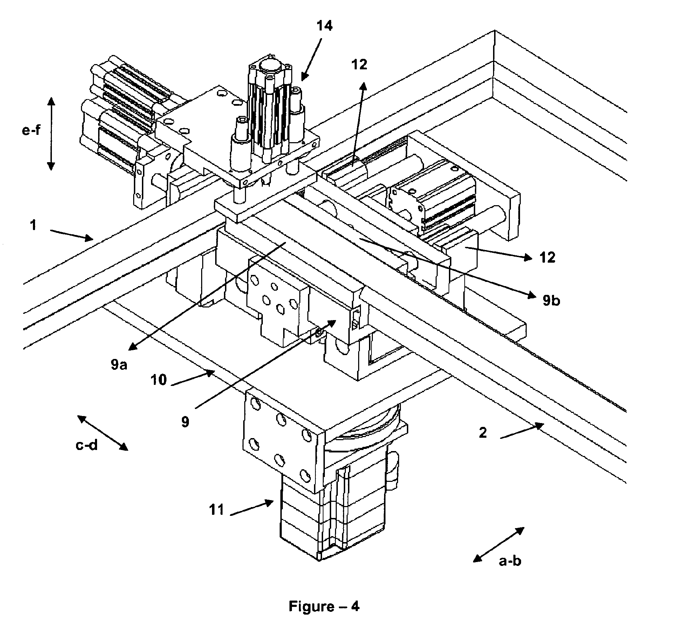

Figure 4 is a schematic perspective illustration of an interconnection profile, when it is placed in a retainer block.

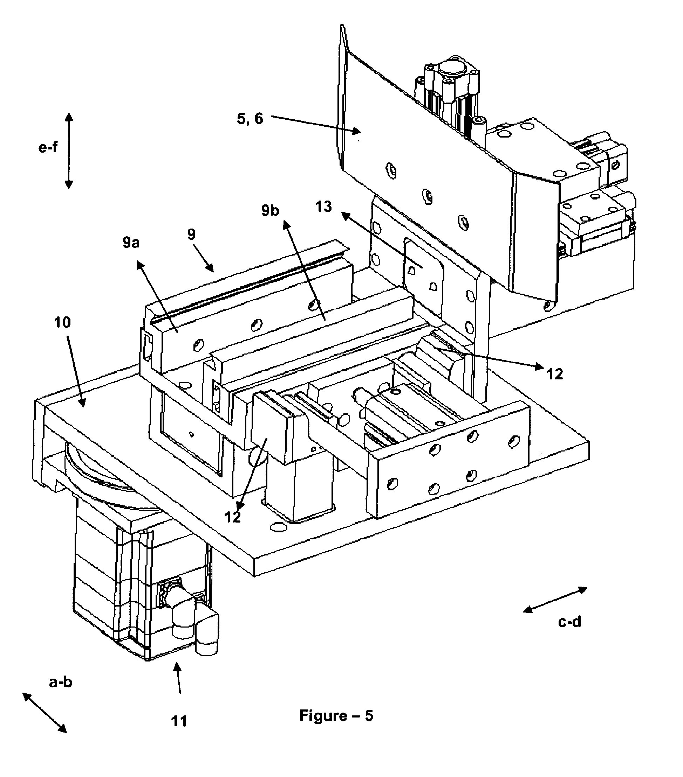

Figure 5 is a schematic perspective illustration of a side thrust.

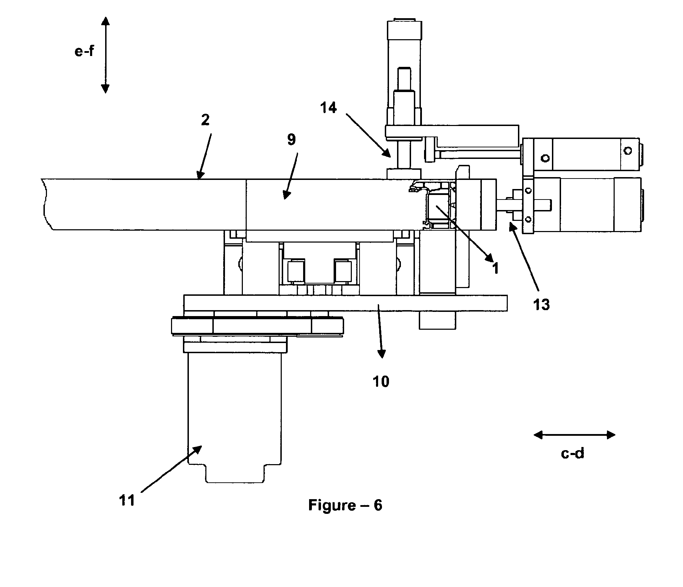

Figure 6 is a schematic side illustration of a press used for preventing burr formation.

The parts in said figures are individually enumerated as following.
Profile joining system (A)
Frame (1)
Side profiles (1 a, 1b, 1 c, 1 d)
Interconnection profile (2)
Front thrust (3)
Claim (4)
Side thrust (5)
Side thrust (6)
Stand (7)
Positioning guide (8)
Retainer block (9)
Jaws (9a, 9b)
Base plate (10)
Vibration unit (11)
Brake mechanism (12)
Press (13)
Press (14)

### Description of Invention

The profile joining system (A) according to the present invention as illustrated in figures 1 to 3 is developed for joining an interconnection profile (2) into a frame (1) by means of friction welding. The system (A) comprises in general terms a stand (7) onto which a frame (1) is situated; front and side thrusts (3, 5, 6) onto which the side profiles (1a, 1c, 1d), i.e. jambs, of the frame (1) are leaned; at least one clamp (4), disposed on the front thrust (3) and clamping at least one side profile (1a) (the clamps (4) can also be arranged so as to clamp the other side profiles (1b, 1c, 1d)); at least one positioning guide (8) adjusting the position of the interconnection profile (2), i.e. meeting rail; at least one retainer block (9), used to keep the interconnection profile (2) immobilized where it is situated; and at least one vibration unit which provides the joining of the interconnection profile (2) to the frame (1) by means of vibration.

The frame (1) and the interconnection profile (2) are joined temporarily before put into the system (A). During this joining operation, the interconnection profile (2) is tightly fit in between two side profiles (1c, 1d) of the frame. Thus, the butt surfaces of the interconnection profile (2) are brought in contact with the side surfaces of said side profiles (1c, 1d). These contact surfaces are the surfaces onto which friction welding is to be applied.

Prior to temporary joining, the butt surfaces of the interconnection profiles (butt surfaces meaning the open sections of both ends of the profile) are processed according to the geometrical structure of the side surface of side profiles (1c, 1d) so as to obtain the most proper contact surface for welding.

Afterwards, the temporarily-joined frame (1) and interconnection profile (2) is placed on the stand (7), so that one side profile (1a) of the frame (1) is leaned against the front thrust (3), and the combination of the frame (1) and interconnection profile (2) is thus put into the system (A). The system (A) is further provided with two side thrusts (5, 6) in order to adjust the position of the frame (1), so that while one side profile (1c) is leaned against the first side thrust (5), the other opposite side profile (1d) is rested against the second side thrust (6).

At least one clamp (4) is provided on the front thrust (3) (the clamps (4) can alternatively be arranged to clamp the other side profiles (1b, 1 c, 1 d)), such that the side profile (1 a), which is leaned against the front thrust (3), is clamped by means of this clamp (4). Thus, said side profile (1a) is immobilized on the front thrust (3). The front thrust (3) is a component that can be displaced forth and back (directions a-b) with an adjustable positioning. Thanks to this feature, it becomes possible to adjust the position of the frame (1) in for- and backward directions (a-b) within the system (A).

The forth and back displacement (directions a-b) of the frame (1) allows to adjust the position of the interconnection profile (2) as well. For this purpose, at least one positioning guide (8) is disposed in the system (A), which is capable of displacing at down- and upward directions (e-f). The positioning guide (8) is displaced upward without displacing the front thrust (3) and is raised to the side of the interconnection profile. The frame (1) and profile (2) are moved together until leaning against the guide (8) with the displacement of the front thrust (3). When the profile (2) is leaned against the guide, the movement is terminated; but the displacement of frame (1) is continued until it arrives at the desired position. Thus, the position of the profile (2) with respect to the frame is adjusted. It is also possible to use one positioning guide (8), each at one side of the profile (2). In this case, the profile's position can be adjusted with the forward and backward displacement of the frame in either direction (a-b).

The frame (1), now brought to the desired position, is taken to the welding position by displacing the stand (7) downward (the stand (7) can displace at down- and upward directions (e-f)). When the frame (1) is lowered, the interconnection profile (2) becomes situated into the retainer blocks (9). The retainer blocks (9) are placed close to both ends of the profile (2). The inner surface of the blocks (9) is formed so as to rest onto the side surface of the profile (2). Each block (9) is equipped with two jaws (9a, 9b), at least one of the jaws making a back-/forward displacement (directions a-b) (see figures 4 and 5) both to open/close the block and to tightly immobilize the profile (2).

As referred to *supra,* the frame (1) is positioned between one front thrust (3) and two side thrusts (5, 6). The side thrusts (5, 6) can either be stationary, or at least one of them can be arranged to displace at right-left directions (c, d) for welding frames of different widths. In this manner, the frame (1) is immobilized between both the front thrust (3) and the side thrusts (5, 6).

After the frame (1) is immobilized between the thrusts (3, 5, 6) and the interconnection profile (2) in the retainer blocks (9), the profile (2) and the frame (1) are joined together permanently by means of friction welding. For this purpose, the base plates (10) (see figures 4 to 6), to which the retainer blocks (9) are coupled, are vibrated under high frequency at for-/backward directions (a-b). The displacement of base plates is provided from the vibration unit (11) (see figures 3 to 6) to which they are coupled to. The vibration process can either be performed linearly at for-/backward directions (a-b), as is the case above, or in a rotational, or orbital manner.

While the interconnection profile (2) rubs against the frame (1) by means vibration, the heat generated in between two pieces causes the friction surfaces to melt to some extent so that they are welded together. A separate mechanism is provided in the system (A), pressing the frame (1) and profile (2) against each other to yield a robust welding. For this purpose, one press (13) (see figures 5 and 6) is provided at the lower part of each one side thrust (5, 6) for exerting press to the side profiles (1c, 1d) at right and left directions (c-d). The operation direction of both presses (13) is along the axis of the interconnection profile (2). In other words, one press (13) exerts force on the frame leftward (d) from below a side thrust (5), while the other press exerts force on the same frame rightward (c) from below the second side thrust (6). The direction of exerted press force is kept similarly along the profile (2), so that while the profile (2) is exposed to vibration, it is fit into the frame (1) in a robust manner. The press force of the presses (13) can be adjusted according to the material and strength of the profiles subjected to friction welding.

Avoiding the formation of burrs at the welding site during friction welding is also within the objectives of the present invention. For this purpose, one extra press (14) (see Figure 4 and Figure 6), one each arranged at each welding site, is also disposed in the system (A).

These presses (14) prevent burr formation by exerting press from above on the joining sites of the profile (2) and frame (1), while the friction welding process is in progress. Accordingly, the operation direction of said presses (14) arranged in the system (A) are the up-/downward directions (e-f). The press exerted by the presses prevents the upward flow of burrs. The press force of the presses (14) can likewise be adjusted according to the material and strength of the profiles subjected to friction welding. Additionally, the activation time of presses can be set according to the formation of burrs.

Another feature of the system (A) is that the mobile jaws (9a, 9b) of the retainer blocks (9) are tightened by means of a brake mechanism (12), so that the positions of blocks (9) on the respectively coupled-base plates (10) are fixed. Said jaws (9a, 9b) are tightly clutched by means of hydraulic or hydro-pneumatic brake mechanisms so that they cannot be opened during the vibration process. Thanks to this feature, the retainer blocks (9) are enabled to clamp the interconnection profiles (2) in a sound manner.

The system (A) is also provided with at least one fastening tab, which exerts press to at least one of the side profiles (1c, 1d). Since the tips of these fastening tabs are tapered, they form recess-shaped traces on the points of the profiles (1c, 1d) to which they rest, assisting in maintaining the positions of profiles (1c, 1d) while they vibrate. Said fastening tabs are activated once the frame (1) is positioned, and are released back from the profiles following the welding operation.

In an alternative embodiment of the present invention, all mobile units, such as the stand (7), thrusts (3, 5, 6), presses (13, 14), brakes (12), guides (8), retainer blocks (9), vibration units (11), as well as the mobile subparts thereof can be driven by means of motors, pumps, etc.; and various sensors can be used for positioning the frame (1) and the profile (2). The operation of the system (A) can be arranged by means of a separate control unit. Following the completion of the welding operation, all said mobile parts are restored to their initial positions (to their positions, before the frame is positioned).

## Claims

1. A profile joining system (A) used for joining an interconnection profile (2), i.e. meeting rail profile, which is already tightly fit in between two side profiles (1c, 1d), i.e. jambs, of a frame (1), to said frame (1), by means of friction welding, **characterized by** comprising
a stand (7) onto which a frame (1) is situated;
a front thrust (3) onto which one side profile (1a) of the frame (1) is leaned;
at least one clamp (4), clamping at least one side profile (1a, 1b, 1c, 1d);
a couple of side thrusts (5, 6) onto which two opposite side profiles (1c, 1d) of the frame (1) are leaned;
at least one retainer block (9), into which the interconnection profile (2) is placed;
is one base plate (10), one each coupled to each retainer block (9);
at least one vibration unit (11) used for friction-welding the interconnection profile (2) to the frame (1) by means of vibrating said base plates (10).

2. A profile joining system (A) according to Claim 1, **characterized in that** said retainer block (9) is provided with two mutual jaws (9a, 9b), at least one of said jaws being displaceable for- and backward (at directions a and b).

3. A profile joining system (A) according to Claim 1, **characterized in that** the stand (7) can be displaced up- and downward (at directions e and f).

4. A profile joining system (A) according to Claim 3, **characterized in that** the interconnection profile (2) is placed into the retainer block (9) by displacing the stand (7) downward.

5. A profile joining system (A) according to Claim 1, **characterized in that** the front thrust (3) can be displaced for- and backward (at directions a and b).

6. A profile joining system (A) according to Claim 5, **characterized by** comprising at least one positioning guide (8), onto which the interconnection profile (2) is leaned, and which is capable of displacing down- and upward (at directions e and f) on at least one side of the profile (2), once the front thrust (3) puts the frame (1) into motion.

7. A profile joining system (A) according to Claim 1, **characterized in that** the clamp (4) is situated on the front thrust (3).

8. A profile joining system (A) according to Claim 1, **characterized by** comprising at least one fastening tab, which exerts press to at least one of the side profiles (1c, 1d), once the frame (1) is positioned.

9. A profile joining system (A) according to Claim 1, **characterized in that** the inner surface of said retainer block (9) is shaped so as to become seated on the side surface of the profile (2).

10. A profile joining system (A) according to Claim 1, **characterized in that** at least one of the side thrusts (5, 6) can be displaced at right and left directions (c, d).

11. A profile joining system (A) according to Claim 1, **characterized in that** said base plates (10) are vibrated by means of linear displacement.

12. A profile joining system (A) according to Claim 1, **characterized in that** said base plates (10) are vibrated by means of rotational displacement.

13. A profile joining system (A) according to Claim 1, **characterized in that** said base plates (10) are vibrated by means of orbital displacement.

14. A profile joining system (A) according to Claim 1, **characterized in that** the lower part of one side thrust (5) is provided with a press (13), which exerts press on the side profiles (1c) along the axis of the profile (2).

15. A profile joining system (A) according to Claim 1, **characterized in that** the lower part of one side thrust (6) is provided with a press (13), which exerts press on the side profiles (1d) along the axis of the profile (2).

16. A profile joining system (A) according to Claim 1, **characterized in that** one press (14) is provided, exerting press from above onto each joining site of the profile (2) and frame (1) during the friction welding process.

17. A profile joining system (A) according to Claim 2, **characterized by** comprising one brake mechanism (12) for each mobile jaw (9a, 9b) of the retainer bocks (9), said brake mechanism clutching said jaw so as to immobilize its position on the base plate.

18. A profile joining system (A) according to any of claims 1 to 17, **characterized in that** all mobile units such as the stand (7), thrusts (3, 5, 6), presses (13, 14), brakes (12), guides (8), retainer blocks (9) and the mobile subparts thereof are driven by means of elements such a motors, pumps, etc.

19. A profile joining system (A) according to any of the claims 1 to 18, **characterized by** comprising positioning sensors for the frame (1) and profile (2).

20. A profile joining system (A) according to any of the claims 1 to 18, **characterized by** comprising a control unit regulating the operation of the system (A).

## Patentansprüche

1. Prafilvarbindungssystem (A) zum Verbinden eines Zwischenverbindungsprofils(2), das heißt eines Sattelüberfälzungsprofils, das bereits fest zwischen zwei Seitenprofilen (1c, 1d), das heißt Schenkeln, eines Rahmens (1) eingefügt ist, mit dem Rahmen (1) mittels Reibschweißen,
**dadurch gekennzeichnet, dass** das
Profilverbindungssystem umfasst einen Ständer (7), auf dem sich ein Rahmen (1) befindet,
eine vordere Stütze (3), gegen welche ein Seitenprofil (1a) des Rahmens (1) anliegt, wenigstens eine Einspannklemme (4), die wenigstens ein Seitenprofil (1a, 1b, 1c, 1d) klemmt,
ein Paar von Seitenstützen (5, 6), gegen die zwei gegenüberliegende Seitenprofile (1c, 1d) des Rahmens (1) angelegt sind,
wenigstens einen Halteblock (9), in dem das Zwischenverbindungsprofil (2) angeordnet ist,
eine Basisplatte (10), wobei jeweils eine davon mit einem Halteblock (9) verbunden ist, wenigstens eine Vibrationseinheit (11) zum Reibschweißen des Zwischenverbindungsprofils (2) mit dem Rahmen (1) mittels Vibrieren der Basisplatten (10).

2. Profilverbindungssystem (A) nach Anspruch 1, **dadurch gekennzeichnet, dass** der Halteblock (9) mit zwei gegenseitigen Haltebacken (9a, 9b) versehen ist, wobei wenigstens eine der Haltebacken vorwärts und rückwärts versetzbar ist (in die Richtungen a und b).

3. Profilverbindungssystem (A) nach Anspruch 1, **dadurch gekennzeichnet, dass** der Ständer (7) nach oben und nach unten versetzbar ist (in die Richtungen e und f).

4. Profilverbindungssystem (A) nach Anspruch 3, **dadurch gekennzeichnet, dass** das Zwischenverbindungsprofil (2) in dem Halteblock (9) angeordnet ist, in dem der Ständer (7) nach unten versetzt wird.

5. Profilverbindungssystem (A) nach Anspruch 1, **dadurch gekennzeichnet, dass** die vordere Stütze (3) nach vorne und nach hinten versetzbar ist (in die Richtungen a und b).

6. Profilverbindungssystem (A) nach Anspruch 5, **dadurch gekennzeichnet, dass** es wenigstens eine Positionierungsführung (8) umfasst, auf der das Zwischenverbindungsprofil (2) abgestützt ist, und die geeignet ist, an wenigstens einer Seite des Profils (2) nach oben und nach unten (in die Richtungen e und f) versetzt zu werden, wenn die vordere Stütze (3) den Rahmen (1) in Bewegung setzt.

7. Profilverbindungssystem (A) nach Anspruch 1, **dadurch gekennzeichnet, dass** die Einspannklemme (4) an der vorderen Stütze (3) angeordnet ist.

8. Profilverbindungssystem (A) nach Anspruch 1, **dadurch gekennzeichnet, dass** es wenigstens eine Befestigungsklappe umfasst, die auf wenigstens eines der Seitenprofile (1c, 1d) Druck ausübt, nachdem der Rahmen (1) positioniert ist.

9. Profilverbindungssystem (A) nach Anspruch 1, **dadurch gekennzeichnet, dass** die innere Fläche des Halteblocks (9) so geformt ist, dass sie an der Seitenfläche des Profils (2) zur Anlage kommt.

10. Profilverbindungssystem (A) nach Anspruch 1, **dadurch gekennzeichnet, dass** wenigstens eine der seitlichen Stützen (5, 6) nach rechts und links (Richtungen c, d) versetzbar ist.

11. Profilverbindungssystem (A) nach Anspruch 1, **dadurch gekennzeichnet, dass** die Basisplatten (10) mit linearem Versatz vibriert werden.

12. Profilverbindungssystem (A) nach Anspruch 1, **dadurch gekennzeichnet, dass** die Basisplatte (10) mit Rotationsversatz vibriert werden.

13. Profilverbindungssystem (A) nach Anspruch 1, **dadurch gekennzeichnet, dass** die Basisplatten (10) mit einer kreisförmigen Bahn vibriert werden.

14. Profilverbindungssystem (A) nach Anspruch 1, **dadurch gekennzeichnet, dass** der untere Bereich einer seitlichen Stütze (5) mit einer Presse (13) versehen ist, die auf die Seitenprofile (1c) entlang der Achse des Profils (2) Druck ausübt.

15. Profilverbindungssystem (A) nach Anspruch 1, **dadurch gekennzeichnet, dass** der untere Bereich einer seitlichen Stütze (6) mit einer Presse (13) versehen ist, die auf die Seitenprofile (1d) entlang der Achse des Profils (2) Druck ausübt.

16. Profilverbindungssystem (A) nach Anspruch 1, **dadurch gekennzeichnet, dass** eine Presse (14) vorgesehen ist, die auf jede Verbindungsseite des Profils (2) und den Rahmen (1) während des Reibschweißprozesses von oben Druck ausübt.

17. Profilverbindungssystem (A) nach Anspruch 2, **dadurch gekennzeichnet, dass** dieses einen Bremsmechanismus (12) für jede mobile Haltebacke (9a, 9b) des Halleblocks (9) umfasst, wobei der Bremsmechanismus die Haltebacke hält, um deren Position an der Basisplatte zu immobilisieren.

18. Profilverbindungssystem (A) nach einem der Ansprüche 1 bis 17, **dadurch gekennzeichnet, dass** sämtliche mobilen Einheiten wie Ständer (7), Stützen (3, 5, 6), Pressen (13, 14), Bremsen (12), Führungen (8), Halteblöcke (9) und deren mobile Unterelemente mittels Elementen wie Motoren, Pumpen, etc. angetrieben sind.

19. Profilverbindungssystem (A) nach einem der Ansprüche 1 bis 18,
**dadurch gekennzeichnet, dass** es Positionierungssensoren für den Rahmen (1) und das Profil (2) umfasst

20. Profilverbindungssystem (A) nach einem der Ansprüche 1 bis 18, **dadurch gekennzeichnet, dass** es eine Steuerungseinheit umfass, die den Betrieb des Systems (A) reguliert.

## Revendications

1. Système d'assemblage de profilé (A) utilisé pour assembler un profilé de raccordement mutuel (2), à savoir un profilé de traverse de rencontre, qui est déjà installé de façon serrée entre deux profilés latéraux (1c, 1d). à savoir des montants, d'un cadre (1), audit cadre (1), au moyen d'un soudage par friction, **caractérisé en ce qu'**il comprend
un socle (7) sur lequel un cadre (1) est positionné ;
une butée avant (3) sur laquelle un profilé latéral (1a) du cadre (1) prend appui ;
au moins un serre-joint (4), serrant au moins un profilé latéral (1a, 1b, 1c, 1d) ;
une paire de butées latérales (5, 6) sur lesquelles deux profilés latéraux opposés (1c, 1d) du cadre (1) prennent appui ;
au moins un bloc de retenue (9), dans lequel le profilé de raccordement mutuel (2) est positionné ;
une plaque de base (10), une chacune accouplée avec chaque bloc de retenue (9) ;
au moins une unité vibratoire (11) utilisée pour souder par friction le profite de raccordement mutuel (2) au cadre (1) au moyen d'une mise en vibration desdites plaques de base (10).

2. Système d'assemblage de profilé (A) selon la revendication 1, **caractérisé en ce que** ledit bloc de retenue (9) est pourvu de deux mâchoire mutuelles (9a, 9b), au moins une desdites mâchoires étant déplaçable vers l'avant et vers l'arrière (dans les directions a et b).

3. Système d'assemblage de profilé (A) selon la revendication 1, **caractérisé en ce que** le socle (7) peut être déplacé vers le haut et vers le bas (dans les directions e et f).

4. Système d'assemblage de profilé (A) selon la revendication 3, **caractérisé en ce que** le profilé de raccordement mutuel (2) est positionné dans le bloc de retenue (9) en déplaçant le socle (7) vers le bas.

5. Système d'assemblage de profilé (A) selon la revendication 1, **caractérisé en ce que** la butée avant (3) peut être déplacée vers l'avant et vers l'arrière (dans les directions a et b).

6. Système d'assemblage de profilé (A) selon la revendication 5, **caractérisé en ce qu'**il comprend au moins un guide de positionnement (8), sur lequel le profilé de raccordement mutuel (2) prend appui, et qui est capable de se déplacer vers le bas et vers le haut (dans les directions e et f) sur au moins un côté du profilé (2), une fois que la butée avant (3) met le cadre (1) en mouvement.

7. Système d'assemblage de profilé (A) selon la revendication 1, **caractérisé en ce que** le serre-joint (4) est positionné sur la butée avant (3).

8. Système d'assemblage de profilé (A) selon la revendication 1, **caractérisé en ce qu'**il comprend au moins une languette de fixation, qui exerce une pression sur au moins un des profilés latéraux (1c, 1d), une fois que le cadre (1) est positionné.

9. Système d'assemblage de profilé (A) selon la revendication 1, **caractérisé en ce que** la surface intérieure dudit bloc de retenue (9) est formée afin d'être assise sur la surface latérale du profilé (2).

10. Système d'assemblage de profilé (A) selon la revendication 1, **caractérisé en ce qu'**au moins une des butées latérales (5, 6) peut être déplacée dans des directions droite et gauche (c, d).

11. Système d'assemblage de profilé (A) selon la revendication 1, **caractérisé en ce que** lesdites plaques de base (10) sont mises en vibration au moyen d'un déplacement linéaire.

12. Système d'assemblage de profilé (A) selon la revendication 1, **caractérisé en ce que** lesdites plaques de base (10) sont mises en vibration au moyen d'un déplacement rotatif.

13. Système d'assemblage de profilé (A) selon la revendication 1, **caractérisé en ce que** lesdites plaques de base (10) sont mises en vibration au moyen d'un déplacement orbital.

14. Système d'assemblage de profilé (A) selon la revendication 1, **caractérisé en ce que** la partie inférieure d'une butée latérale (5) est pourvu d'une presse (13), qui exerce une pression sur les profilés latéraux (1c) le long de l'axe du profilé (2).

15. Système d'assemblage de profilé (A) selon la revendication 1, **caractérisé en ce que** la partie inférieure d'une butée latérale (6) est pourvue d'une presse (13), qui exerce une pression sur les profilés latéraux (1d) le long de l'axe du profilé (2).

16. Système d'assemblage de profilé (A) selon la revendication 1, **caractérisé en ce qu'**une presse (14) est prévue, exerçant une pression à partir du dessus sur chaque site d'assemblage du profilé (2) et du cadre (1) durant le procédé de soudage par friction.

17. Système d'assemblage de profilé (A) selon la revendication 2, **caractérisé en ce qu'**il comprend un mécanisme de freinage (12) pour chaque mâchoire mobile (9a, 9b) des blocs de retenue (9), ledit mécanisme de freinage serrant ladite mâchoire afin d'immobiliser sa position sur la plaque de base.

18. Système d'assemblage de profilé (A) selon l'une quelconque des revendications 1 à 17, **caractérisé en ce que** toutes les unités mobiles, telles que le socle (7), les butées (3, 5, 6), les presses (13, 14), les freins (12), les guides (8), les blocs de retenue (9) et les sous-parties mobiles de ceux-ci, sont entraînées au moyen d'éléments tels que des moteurs, des pompes, etc.

19. Système d'assemblage de profilé (A) selon l'une quelconque des revendications 1 à 18, **caractérisé en ce qu'**il comprend des capteurs de positionnement pour le cadre (7) et le profilé (2).

20. Système d'assemblage de profilé (A) selon l'une quelconque des revendications 1 à 18, **caractérisé en ce qu'**il comprend une unité de commande commandant le fonctionnement du système (A).
